# EUROPEAN PATENT SPECIFICATION

(11) **EP 3 432 701 B1**
(45) Date of publication and mention of the grant of the patent: **04.11.2020**
(21) Application number: 17715785.6
(22) Date of filing: 22.03.2017
(51) Int. Cl.: A01D 90/08

(54) **A BALE TRANSPORTER**
BALLENWAGEN
TRANSPORTEUR DE BALLES

(30) Priority: 22.03.2016 IE 20160083
(43) Date of publication of application: 30.01.2019
(73) Proprietor: Sheedy, Thomas, County Limerick (IE); Sheedy, Nuala, County Limerick (IE); O'Connell, Anne, County Cork (IE); Herbert, Michael, County Limerick (IE); O'Donnell, Mark, County Limerick (IE)
(72) Inventor: Sheedy, Thomas, County Limerick (IE); Sheedy, Nuala, County Limerick (IE); O'Connell, Anne, County Cork (IE); Herbert, Michael, County Limerick (IE); O'Donnell, Mark, County Limerick (IE)
(74) Representative: Gorman, Francis Fergus
(86) International application number: PCT/IE2017/000005
(87) International publication number: WO 2017/163229

(56) References cited:
- DE-U1-202016 100 132
- GB-A- 2 044 722
- US-A- 5 316 426
- US-A1- 2004 197 167

## Description

The present invention relates to a transporter, and in particular, though not limited to a bale transporter for transporting relatively large cylindrical bales of fodder material.

Large cylindrical bales of fodder material, typically, of grass, hay and straw are known and are commonly referred to as round bales. Such round bales, in general, are of diameter in the range of 1.0 Metre to 1.8 Metres, and in general, are of length in the range of 1.2 Metres to 1.5 Metres. Large round bales of grass, typically, are sealably wrapped with a plastics wrapping sheet material in order to promote fermentation to convert the grass to silage. Bale transporters for such large round bales are known. The simplest of such bale transporters comprise an attachment for fitting to a three-point linkage of a tractor, the back actor arms of a tractor, or the arms of a front end loader of a tractor, which typically comprises at least two parallel spaced apart tines on which a bale is supported during transportation. Other such bale transporters comprise trailers and the like which are suitable for hitching to a tractor or other prime mover.

However, in such trailer type bale transporters, the bale has to be lifted from the ground onto the trailer, by a suitable lift, for example, a forklift mechanism attached to a tractor, and the forklift must engage the bale on the ground, and then transfer the bale to the trailer. This requires aligning the forklift correctly with the bale on the ground and then aligning the forklift with the trailer so that the bale can be correctly placed on the trailer. Alignment and loading of bales into such bale transporters can be difficult, and quite time consuming and in the case of wrapped bales puncturing of the wrapping material can arise which results in deterioration of the contents of the bale. This is undesirable.

There is therefore a need for a bale transporter which addresses at least some of the problems of known bale transporters.

U.S. Specification No. 2004/0197167 of Haukaas discloses a bale transporter comprising a pair of elongated cartridges. Each cartridge is configured for collecting bales sequentially from the ground, and each cartridge defines an elongated hollow interior region and terminates at one end in a forward open mouth. The forward open mouth is configured to accommodate a bale into the hollow interior region. Outer and inner forward guide members extend from the cartridge adjacent the forward open mouth for engaging a bale on the ground and urging the bale into alignment with the forward open mouth as the cartridge is being advanced towards the bale.

U.S. Patent Specification No. 5,316,426 of Dwyer discloses a bale carrier which comprises a chassis configured to support a plurality of bales. A pick-up cradle is located to one side of the chassis for picking up a bale from the ground. The pick-up cradle is pivotally coupled to the chassis for transferring a bale from the ground onto the chassis. The cradle comprises a pair of spaced apart forwardly extending side members, one of which rotatably carries a wheel or a plate which defines a hexagonal periphery for engaging and rotating a bale on the ground through 90° as the pick-up cradle is being urged against the bale.

The invention is directed towards providing a transporter, and in particular, a bale transporter for transporting a bale, which addresses some of the problems of known bale transporters.

According to the invention there is provided a transporter comprising at least one elongated cartridge configured for collecting bales sequentially from the ground and defining an elongated hollow interior region and terminating at one end in a forward open mouth configured to accommodate a bale into the hollow interior region, the cartridge defining a longitudinally extending main central axis, wherein at least one first guide roller comprising one of a frusto-conical roller and a cylindrical roller is rotatably mounted adjacent the forward open mouth and is configured for urging a bale on the ground into alignment with the forward open mouth of the cartridge as the cartridge is being advanced towards the bale for capturing the bale in the hollow interior region.

Preferably, at least two first guide rollers are rotatably mounted adjacent the forward open mouth and are configured to sequentially engage a bale as the cartridge is being advanced towards the bale.

In one aspect of the invention at least three first guide rollers are rotatably mounted adjacent the forward open mouth and are configured to sequentially engage a bale as the cartridge is being advanced towards the bale.

Preferably, the at least one first guide roller is configured to define a first lead-in to the forward open mouth for progressively urging the bale into alignment with the forward open mouth of the cartridge as the bale is being progressively engaged by the first guide roller.

In another aspect of the invention the bale transporter is configured for towing by a tractor and the cartridge is configured to extend outwardly on one side of the path of normal forward motion of the tractor with the main central longitudinal axis extending substantially parallel to the direction of normal forward motion of the tractor and the forward open mouth facing forwardly.

Preferably, the at least one first guide roller is located forwardly of the forward open mouth of the cartridge on a side of the main central longitudinal axis most remote from the path of the normal forward motion of the tractor. Advantageously, the at least one first guide roller is located forwardly of the forward open mouth and on a side of the forward open mouth most remote from the path of normal forward motion of the tractor.

In another aspect of the invention an outer forward guide member extends from the cartridge adjacent the side of the forward open mouth most remote from the path of normal forward motion of the tractor, the outer guide member extending in a generally forwardly outwardly direction from the forward open mouth relative to the path of normal forward motion of the tractor. Preferably, the at least one first guide roller is rotatably carried on the outer forward guide member.

In one aspect of the invention each first guide roller is of frusto-conical shape. Preferably, each first guide roller is tapered in a generally upwardly direction at a cone angle in the range of 5° to 30°.

Advantageously, each first guide roller is tapered in a generally upwardly direction at a cone angle in the range of 10° to 20°. Ideally, each first guide roller is tapered in a generally upwardly direction at a cone angle in the range of approximately 15°.

In another aspect of the invention at least one second guide roller is rotatably mounted adjacent the forward open mouth of the cartridge and on a side of the forward open mouth opposite to the side of the forward open mouth adjacent which the at least one first guide roller is located, the at least one second guide roller being configured for urging a bale on the ground into alignment with the forward open mouth of the cartridge as the cartridge is being advanced towards the bale for capturing the bale in the hollow interior region.

Preferably, at least two second guide rollers are rotatably mounted adjacent the forward open mouth on the side of the forward open mouth opposite to the side adjacent which the at least one first guide roller is located, the at least two second guide rollers being configured for sequentially engaging a bale as the cartridge is being advanced towards the bale.

In another aspect of the invention at least three second guide rollers are rotatably mounted adjacent the forward open mouth on the side of the forward open mouth opposite to the side adjacent which the at least one first guide roller is located, the at least three second guide rollers being configured for sequentially engaging a bale as the cartridge is being advanced towards the bale.

Preferably, the at least one second guide roller is configured to define a second lead-in to the forward open mouth for progressively urging the bale into alignment with the forward open mouth of the cartridge as the bale is being progressively engaged by the at least one second guide roller.

Advantageously, the at least one second guide roller is located forwardly of the forward open mouth and on a side of the main central longitudinal axis opposite to the side thereof adjacent which the at least one first guide roller is located.

In another aspect of the invention an inner forward guide member extends from the cartridge adjacent the forward open mouth and adjacent the side of the forward open mouth opposite to the side thereof adjacent which the outer forward guide member extends, the inner forward guide member extending in a generally forwardly outwardly direction from the forward open mouth with the outer and inner forward guide members diverging forwardly outwardly from the forward open mouth. Preferably, the at least one second guide roller is rotatably carried on the inner forward guide member.

In one aspect of the invention each second guide roller is of frusto-conical shape. Preferably, each second guide roller is tapered in a generally upwardly direction at a cone angle in the range of 5° to 30°. Advantageously, each second guide roller is tapered in a generally upwardly direction at a cone angle in the range of 10° to 20°. Ideally, each second guide roller is tapered in a generally upwardly direction at a cone angle in the range of approximately 15°.

In another aspect of the invention the cartridge defines an elongated bale accommodating slot extending longitudinally along the cartridge communicating with the hollow interior region, the bale accommodating slot being configured for accommodating a lower portion of the bale extending from the hollow interior region of the cartridge to the ground.

Preferably, a pair of spaced apart elongated main guide members extend longitudinally along the cartridge, the main guide members defining the bale accommodating slot, and being configured for guiding the bale along the hollow interior region as the cartridge is being advanced along the bale on the ground. Advantageously, the outer forward guide member of the cartridge extends forwardly from the one of the main guide members most remote from the path of normal forward motion of the tractor. Preferably, the inner forward guide member extends forwardly from the main guide member located closest to the path of normal forward motion of the tractor.

In another aspect of the invention the transporter comprises a chassis, and the cartridge is moveably mounted on the chassis between a collecting state configured for collecting bales on the ground, and a transporting state with the cartridge spaced apart above the ground for transporting bales. Preferably, the cartridge is moveable in a generally upwardly direction from the collecting state to the transporting state. Advantageously, the cartridge is pivotally coupled to the chassis about a main pivot axis, and is pivotal about the main pivot axis from the collecting state to the transporting state. Ideally, the main pivot axis about which the cartridge is pivotally connected to the chassis extends substantially parallel to the main central longitudinal axis of the cartridge.

In one aspect of the invention the cartridge is pivotal about the main pivot axis through an angle of approximately 90° between the collecting state and the transporting state.

In one aspect of the invention a pair of cartridges are provided, with the main central longitudinal axes of the cartridges extending substantially parallel to each other. Preferably, the cartridges are pivotally coupled to the chassis on respective opposite sides thereof, and are pivotal from the collecting states in a generally upwardly direction towards each other to the transporting state.

In another aspect of the invention an urging means is provided for urging each cartridge between the collecting state and the transporting state. Preferably, at least two urging means are provided for urging each cartridge between the collecting state and the transporting state. Advantageously, each urging means acts between the chassis and the corresponding cartridge. Preferably, each urging means comprises a drive ram. Ideally, each urging means comprises an hydraulically powered drive ram. Preferably, each urging means comprises a double acting hydraulic ram.

In another aspect of the invention a retaining means is provided for retaining each cartridge in the transporting state.

Preferably, each retaining means comprises a latch pivotally coupled to one of the chassis on the corresponding cartridge, and pivotal between a retaining state retaining the corresponding cartridge in the transporting state and the release state releasing the corresponding cartridge from the transporting state. Advantageously, each latch is pivotally mounted on the chassis and is releasably engageable with the corresponding cartridge in the transporting state.

In another aspect of the invention the chassis is carried on at least one pair of spaced apart rotatably mounted ground engaging wheels.

The invention also provides a method for aligning and guiding a bale on the ground through a forward open mouth of an elongated cartridge of a bale transporter into an elongated hollow interior region of the cartridge, the method comprising providing at least one rotatably mounted first guide roller comprising one of a frusto-conical roller and a cylindrical roller adjacent the forward open mouth of the cartridge, advancing the cartridge towards the bale on the ground, engaging the bale on the ground with the at least one first guide roller as the cartridge is advanced relative to the bale to urge the bale into alignment with the forward open mouth of the cartridge, and further advancing of the cartridge relative to the bale to capture the bale in the hollow interior region of the cartridge.

In one aspect of the invention at least two first guide rollers are rotatably mounted adjacent the forward open mouth, and a bale on the ground is sequentially engaged by the at least two first guide rollers as the cartridge is advanced towards the bale.

In another aspect of the invention at least three first guide rollers are rotatably mounted adjacent the forward open mouth, and a bale on the ground is sequentially engaged by the at least three first guide rollers as the cartridge is advanced towards the bale.

In a further aspect of the invention the at least one first guide roller is configured to define a first lead-in to the forward open mouth, and a bale on the ground is progressively urged into alignment with the forward open mouth of the cartridge as the bale is progressively engaged by the first guide roller.

In another aspect of the invention the bale transporter is towed by a tractor with the cartridge extending outwardly on one side of the path of normal forward motion of the tractor with a main central longitudinal axis defined by the cartridge extending substantially parallel to the direction of normal forward motion of the tractor and the forward open mouth facing forwardly.

Preferably, the at least one first guide roller is located forwardly of the forward open mouth of the cartridge.

Advantageously, the at least one first guide roller is located on a side of the forward open mouth most remote from the path of normal forward motion of the tractor.

In another aspect of the invention an outer forward guide member extends from the cartridge adjacent the side of the forward open mouth most remote from the path of normal forward motion of the tractor, the outer guide member extending in a generally forwardly outwardly direction from the forward open mouth relative to the path of normal forward motion of the tractor.

Preferably, the at least one first guide roller is rotatably carried on the outer forward guide member.

In another aspect of the invention at least one second guide roller is rotatably mounted adjacent the forward open mouth of the cartridge, and on a side of the forward open mouth opposite to the side of the forward open mouth adjacent which the at least one first guide roller is located, and a bale on the ground is engaged by the at least one second guide roller as the cartridge is being advanced towards the bale for urging the bale into alignment with the forward open mouth.

Preferably, at least two second guide rollers are rotatably mounted adjacent the forward open mouth on a side of the forward open mouth opposite to the side thereof adjacent which the at least one first guide roller is located, and a bale on the ground is sequentially engaged by the at least two second guide rollers as the cartridge is advanced towards the bale.

In another aspect of the invention at least three second guide rollers are rotatably mounted adjacent the forward open mouth on the side of the forward open mouth opposite to the side adjacent which the at least one first guide roller is located, and a bale on the ground is sequentially engaged by the at least three second guide rollers as the cartridge is being advanced towards the bale.

Preferably, the at least one second guide roller is configured to define a second lead-in to the forward open mouth, and a bale on the ground is progressively urged into alignment with the forward open mouth of the cartridge by the at least one second guide roller as the cartridge is being advanced towards the bale.

Preferably, the at least one second guide roller is located forwardly of the forward open mouth and on a side of the main central axis closest to the path of normal forward motion of the tractor.

In another aspect of the invention an inner forward guide member extends from the cartridge adjacent a side of the forward open mouth opposite to the side thereof adjacent which the outer forward guide member extends the inner forward guide member extending in a generally forwardly outwardly direction from the forward open mouth with the outer and inner forward guide members diverging forwardly outwardly from each other from the forward open mouth. Preferably, the at least one second guide roller is rotatably mounted on the inner forward guide member.

In another aspect of the invention the cartridge defines an elongated bale accommodating slot extending longitudinally along the cartridge communicating with the hollow interior region, the bale accommodating slot being configured for accommodating a lower portion of the bale extending from the hollow interior region to the ground.

Preferably, the cartridge is moveable in a generally upwardly direction from a collecting state for collecting bales on the ground to a transporting state with the cartridge spaced apart above the ground for the transporting bales.

The advantages of the transporter according to the invention are many. A particularly important advantage of the invention is that it permits ready and easy alignment of a bale with the cartridge of the transporter, and loading of the bale into the cartridge with minimal risk of damage to the bale, and in general, with no damage to the bale. This is a particularly important advantage in the transportation of bales of grass which have been wrapped with a number of layers of plastics material in order to promote fermentation of the grass within the bale. In general, the layers of plastics wrapping material on the bale can be punctured if the bale is not handled carefully. Any puncturing of the wrapping material results in the deterioration of the silage in the bale. By virtue of the fact that a bale lying on the ground is urged into alignment with the forward open mouth, and in turn the hollow interior region of the cartridge, by the engagement of the bale with the rotatably mounted first guide roller or rollers, or indeed by the second guide roller or rollers, as the cartridge is being advanced towards the bale on the ground, any risk of puncturing or other damage to the bale or to the plastics wrapping material of the bale is minimised and virtually entirely eliminated, due to the fact that the guide roller or rollers rolls along the surface of the bale, and therefore, there is no drag resistance between the guide roller or rollers and the plastics wrapping material of the bale, or the bale in the case of an unwrapped bale.

Another advantage of the transporter according to the invention is achieved by the provision of the first guide rollers being located on the side of the forward open mouth which is most remote from the path of normal forward motion of the tractor. In general, prior to alignment of a bale with the forward open mouth of the cartridge, a bale lying on the ground, in general, tends to be off-set outwardly from the side of the forward open mouth most remote from the path of normal forward motion of the tractor, and therefore as the cartridge is advancing towards the bale, the bale is progressively engaged by the first guide roller or rollers, and thus progressively urged into alignment with the forward open mouth of the cartridge. However, by providing both first and second guide rollers on the respective opposite sides of the forward open mouth, the bale can readily be aligned with the forward open mouth of the cartridge by engagement with one or other of the first and second guide rollers, depending on the side of the forward open mouth to which the bale is off-set.

A further advantage of the invention is achieved when more than one first guide roller is provided, and preferably, when two or more first guide rollers are provided to define a first lead-in to the forward open mouth of the cartridge, since the two or more first guide rollers being configured to define a first lead-in to the forward open mouth of the cartridge sequentially engage and progressively urge the bale into alignment with the forward open mouth of the cartridge, so that the bale is gently guided into alignment with the forward open mouth of the cartridge, and in turn into the hollow interior region of the cartridge with the central geometrical axis of the bale substantially aligned with and substantially coinciding with the main central geometrical axis defined by the cartridge. Similar advantages are achieved when two or more second guide rollers are provided on the opposite side of the forward open mouth and are configured to define a second lead-in to the forward open mouth of the cartridge.

The invention will be more clearly understood from the following description of some preferred embodiments thereof, which are given by way of example only, with reference to the accompanying drawings, in which:
Fig. 1 is a front perspective view of a bale transporter according to the invention Illustrated in a bale collecting state,
Fig. 2 is a rear end elevational view of the bale transporter of Fig. 1 illustrated in the state of Fig. 1,
Fig. 3 is another perspective view of the bale transporter of Fig. 1 in the state of Fig. 1,
Fig. 4 is a side elevational view of the bale transporter of Fig. 1 in the state of Fig. 1,
Fig. 5 is a top plan view of the bale transporter of Fig. 1 in the state of Fig. 1,
Fig. 6 is a perspective view of the bale transporter of Fig. 1 in a bale transporting state,
Fig. 7 is a side elevational view of a portion of the bale transporter of Fig. 1,
Fig. 8 is a perspective view of another portion of the bale transporter of Fig. 1,
Fig. 9 is a perspective view of a detail of the bale transporter of Fig. 1,
Fig. 10 is a perspective view of a portion of the detail of Fig. 9 of the bale transporter of Fig. 1,
Fig. 11 is an elevational view of the detail of Fig. 10 of the bale transporter of Fig. 1,
Fig. 12 is an enlarged perspective view of a portion of the bale transporter of Fig. 1 illustrating details of the bale transporter,
Fig. 13 is another enlarged perspective view of a portion of the bale transporter of Fig. 1, illustrating details of the bale transporter,
Fig. 14 is a perspective view of a bale transporter according to another embodiment of the invention,
Fig. 15 is a perspective view of a portion of the bale transporter of Fig. 14,
Fig. 16 is a perspective view of a portion of a bale transporter according to another embodiment of the invention, and
Fig. 17 is another perspective view of the portion of Fig. 16 of the bale transporter of Fig. 16.

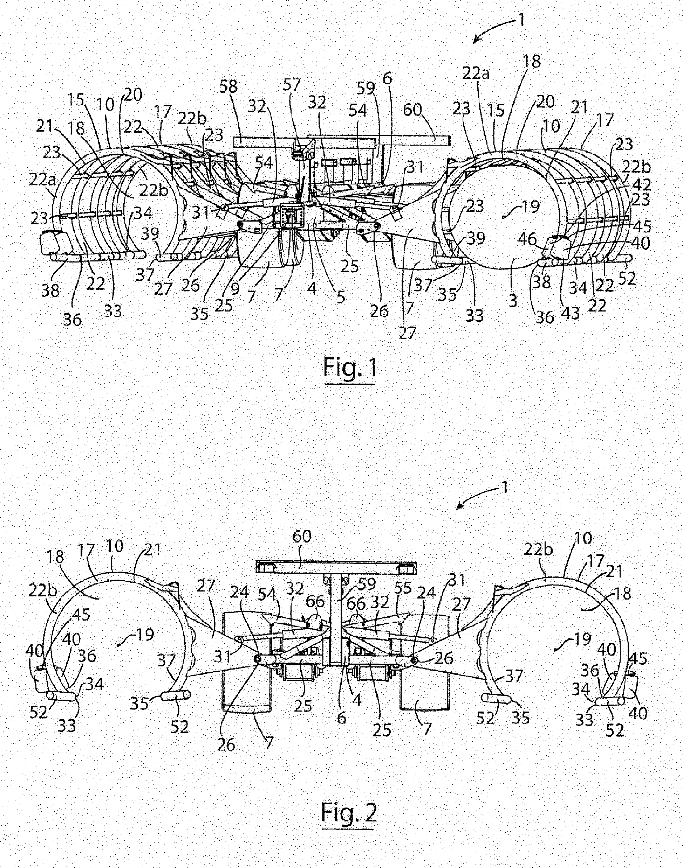

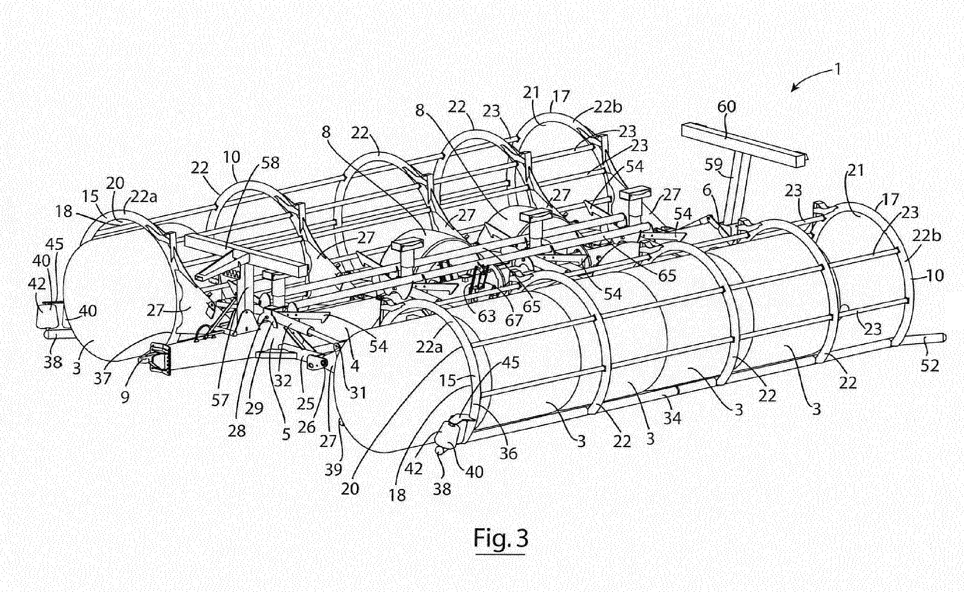

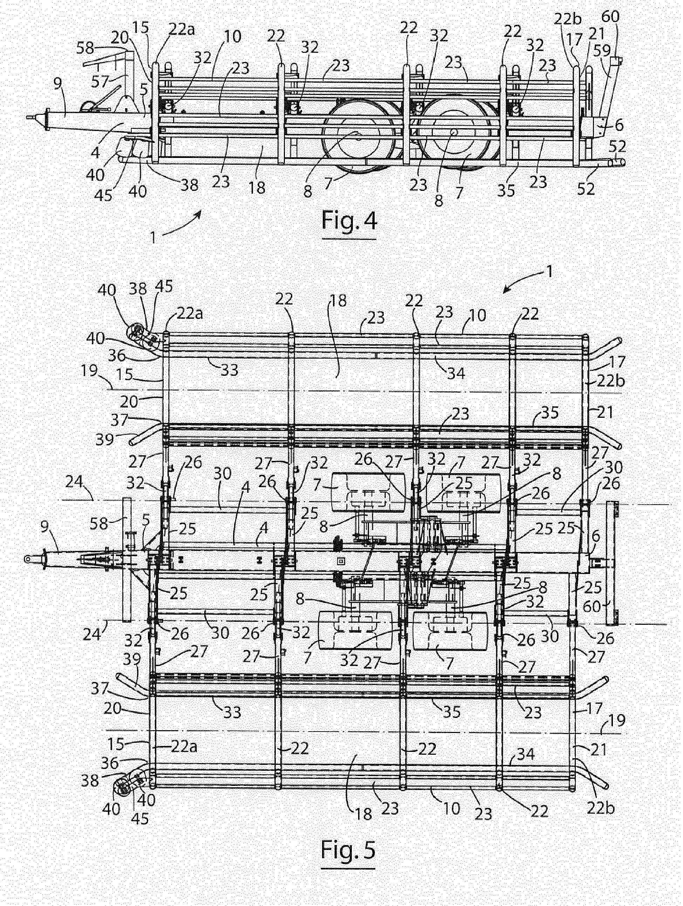

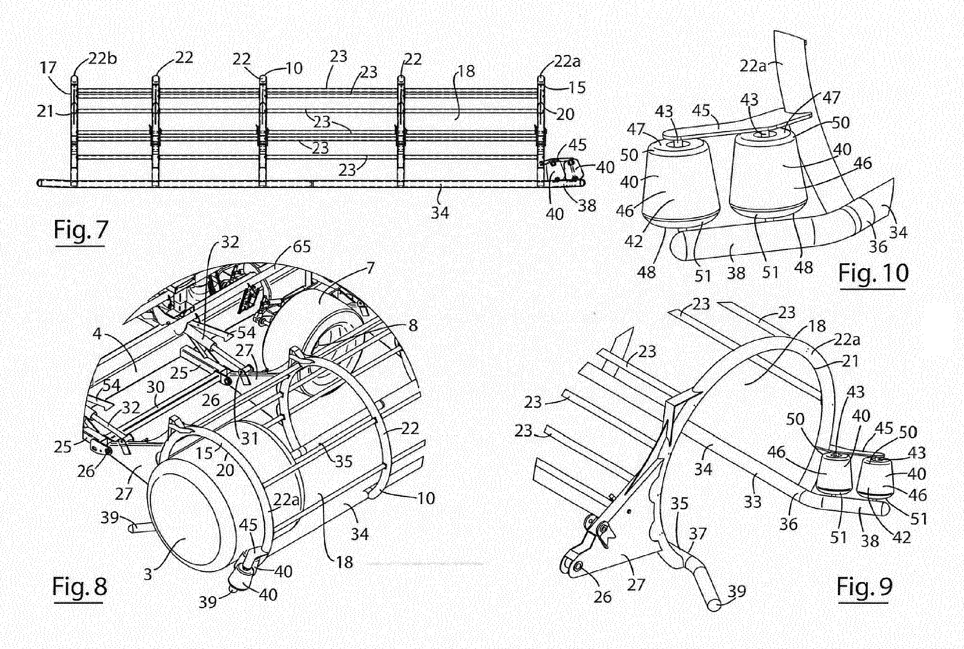

Referring to the drawings, and initially to Figs. 1 to 13 thereof, there is illustrated a transporter according to the invention, which in this embodiment of the invention comprises a bale transporter indicated generally by the reference numeral 1 for hitching to a tractor or other prime mover (not shown) for transporting round bales 3 of fodder material, and typically, wrapped round bales of silage. The bale transporter 1 comprises an elongated chassis 4 which extends between a forward end 5 and a rearward end 6, and which is supported on four ground engaging wheels 7 which are rotatably carried on axles 8 secured to the chassis 4. A forwardly extending tow bar 9 extends forwardly from the forward end 5 the chassis 4 for hitching the bale transporter 1 to a tractor or other prime mover, so that the bale transporter 1 can be towed behind the tractor or other prime mover.

A pair of elongated bale carrying cartridges 10 are pivotally mounted on the chassis 4 and extend longitudinally along the chassis 4 on respective opposite sides thereof. Each cartridge 10 extends between a forward end 15 and a rearward end 17 and defines an elongated hollow interior region 18 for accommodating the bales 3 therein in end to end abutting relationship. Each cartridge 10 defines a main central longitudinally extending axis 19, and the hollow interior region 18 thereof is sized so that when the bales 3 are captured by the cartridge 10 and are located in the hollow interior region 18 the central geometrical axis defined by each bale 3 substantially coincides with the main central longitudinal axis 19 defined by the cartridge 10. In this embodiment of the invention each cartridge 10 is of size suitable for carrying four bales 3 in end to end abutting relationship. Each cartridge 10 terminates at its forward end 15 in a forward open mouth 20 for accommodating each bale 3 therethrough into the hollow interior region 18, and at its rearward end 17, each cartridge 10 terminates in a rearward open mouth 21 for accommodating discharge of the bales 3 therethrough from the hollow interior region 18.

The cartridges 10 in this embodiment of the invention each comprise a framework comprising a plurality of longitudinally spaced apart arcuate frame members 22 of steel which are joined by a plurality of circumferentially spaced apart elongated longitudinally extending members 23 also of steel. The arcuate frame member 22a adjacent the forward end 15 of each cartridge 10 defines the forward open mouth 20 thereof, while the arcuate frame member 22b adjacent the rearward end 17 of each cartridge 10 defines the rearward open mouth 21 thereof. The longitudinally extending members 23 extend from the arcuate frame member 22a defining the forward open mouth 20 of each cartridge 10 to the arcuate frame member 22b defining the rearward open mouth 21 thereof.

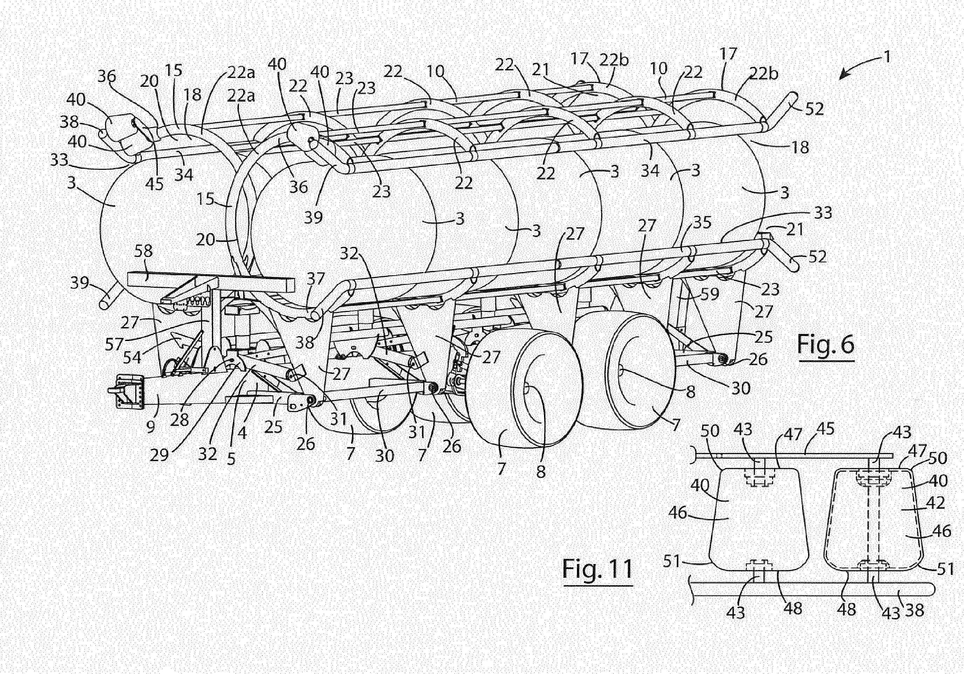

The cartridges 10 are pivotal mounted on the chassis 4 about respective parallel longitudinally extending main pivot axes 24, and are pivotal generally upwardly towards each other through an angle of approximately 90° about the main pivot axes 24 from respective collecting states illustrated in Figs. 1 to 5 adjacent the ground for collecting bales 3 from the ground to a transporting state illustrated in Fig. 6 for transporting the bales 3. The main pivot axes 24 extend parallel to the main central longitudinal axes 19 of the respective cartridges 10, and the cartridges 10 are pivotally carried on the chassis 4 with the main central longitudinal axes 19 thereof extending parallel to each other. With the chassis 14 following the path of normal forward motion of the tractor which is towing the bale transporter 1, the cartridges 10 in the collecting state extend sidewardly outwardly from the path of normal forward motion of the tractor, so that the forward open mouths 20 of the respective cartridges 10 can engage bales on the ground just outside the path of normal forward motion of the tractor on respective opposite sides thereof as the bale transporter 1 is being towed forwardly by the tractor.

Five carrier members 25 extend sidewardly outwardly from the chassis 4 on each side thereof, and each carrier member 25 carries a corresponding pivot shaft 26, which in turn pivotally carries a corresponding pivot mounting bracket 27 extending from the corresponding cartridge 10. The pivot shafts 26 are carried by the carrier members 25 on the respective opposite sides of the chassis 4, so that the pivot shafts 26 on the respective opposite sides of the chassis 4 define the respective main pivot axes 24 about which the respective cartridges 10 are pivotal between the collecting state and the transporting state. Two of the forward carrier members 25a and two of the rearward carrier members 25b on each side of the chassis 4 are connected adjacent the corresponding pivot shafts 26 by respective longitudinally extending reinforcing members 30.

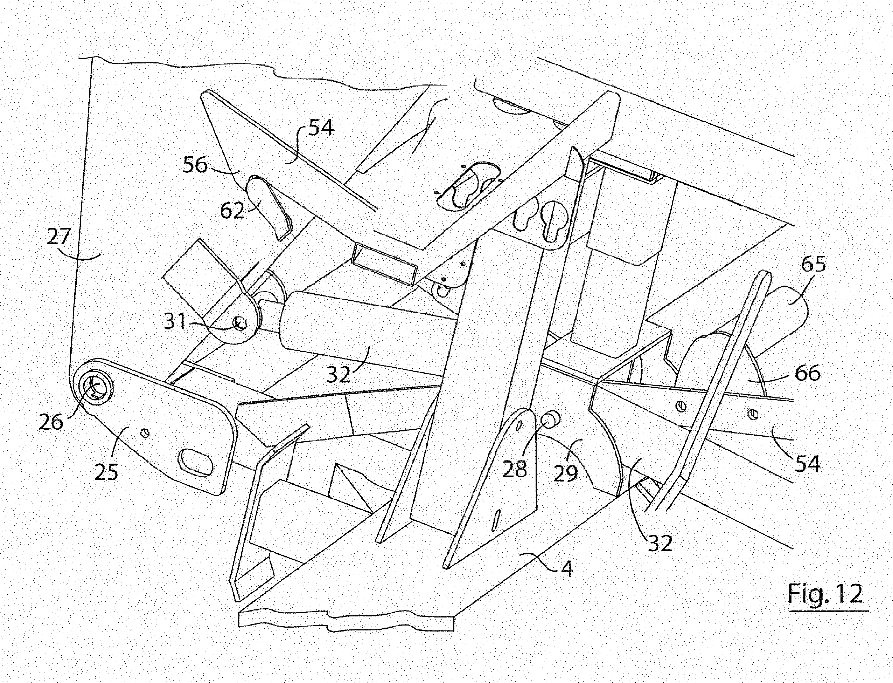

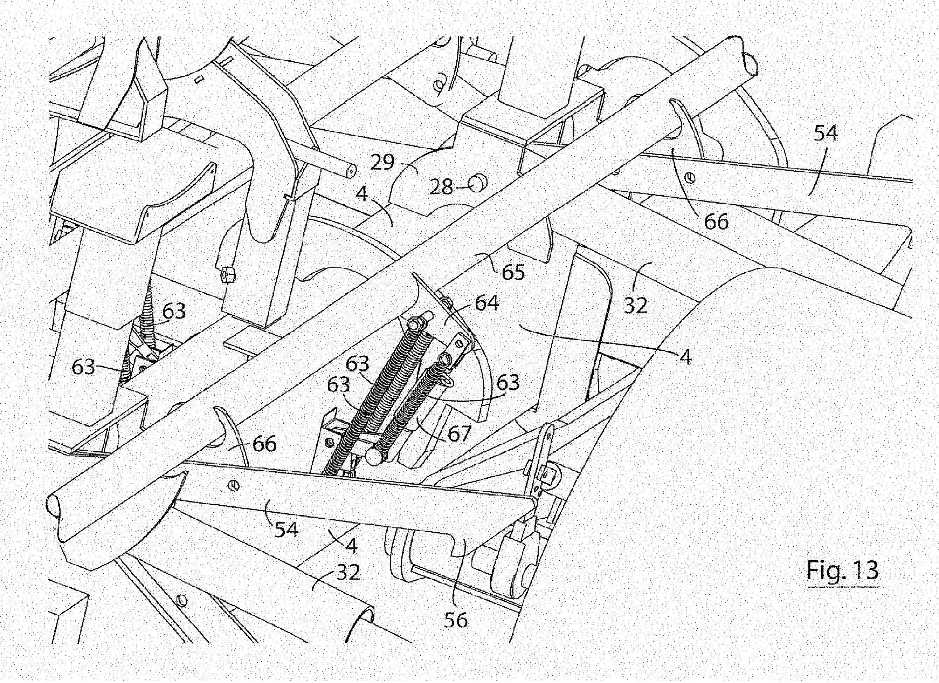

An urging means for urging each cartridge 10 between the collecting state and the transporting state comprises four double acting main hydraulic rams 32 which are pivotally coupled to the chassis 4 by pivot pins 28 carried on inverted u-shaped brackets 29 mounted on the chassis 4, and are pivotally coupled to the corresponding ones of the pivot mounting brackets 27 of the corresponding cartridge 10 by pivot pins 31, see also Figs. 12 and 13. The main rams 32 act between the chassis 4 and the corresponding cartridge 10 for urging the cartridges 10 between the collecting state and the transporting state.

Each cartridge 10 defines an elongated bale accommodating slot 33 which extends longitudinally along the corresponding cartridge 10 from the forward open mouth 20 to the rearward open mouth 21, and which communicates with the hollow interior region 18 for accommodating a lower portion of a bale therethrough from the hollow interior region 18 while the bale is supported on the ground during capture and collection of the bale by the cartridge 10. The bale accommodating slot 33 of each cartridge 10 is defined by a pair of spaced apart parallel elongated longitudinally extending main guide members, namely, an outer main guide member 34 and an inner main guide member 35 both of steel. The inner and outer main guide members 34 and 35 of each cartridge 10 guide a bale in the hollow interior region 19 of the cartridge 10 and supported on the ground along the hollow interior region 19 as the cartridge 10 is being urged along the bale with the bale in the hollow interior region 18 of the cartridge 10. The outer and inner main guide members 34 and 35 extend along the corresponding cartridge 10 from the arcuate member 22a defining the forward open mouth 20 to the arcuate member 22b defining the rearward open mouth 21, with the outer main guide member 34 extending between the forward and rearward open mouths 21 and 22 on an outer side 36 thereof most remote from the chassis 4, and the inner main guide member 35 extending between the forward and rearward open mouths 20 and 21 on an inner side 37 thereof closest to the chassis 4. The arcuate members 22 terminate in the outer and inner guide main members 34 and 35 of the corresponding cartridge 10.

An outer forward guide member 38 extends in a generally outwardly forward direction from the outer main guide member 34 adjacent the forward open mouth 20 of each cartridge 10, and an inner forward guide member 39 extends in a generally outwardly forward direction from the outer main guide member 35 adjacent the forward open mouth 20 of the cartridge 10, so that the inner and outer forward guide members diverge outwardly forwardly from the forward open mouth 20. The outer and inner forward guide members 38 and 39 are each of steel.

A pair of spaced apart first guide rollers 40 are rotatably carried on the outer forward guide member 38 of each cartridge 10, and define an inwardly angled and directed forward lead-in 42 to the forward open mouth 20, so that as the cartridge 10 is being advanced towards a bale on the ground, which is off-set relative to the forward open mouth 20 to the outer side 36 thereof, the first guide rollers 40 sequentially and progressively engage the bale for progressively guiding the bale on the ground into alignment with the forward open mouth 20 of the corresponding cartridge 10. Thus, when the cartridge 10 has advanced towards the bale on the ground to the extent that the bale is adjacent the forward open mouth 20 of the cartridge 10, and is about to enter the hollow interior region 18 of the cartridge 10 through the forward open mouth 20, the bale is substantially aligned with the forward open mouth 20 and in turn with the hollow interior region 18 of the cartridge 10 with the central geometrical axis of the bale substantially aligned with and substantially coinciding with the main central longitudinal axis 19 of the cartridge 10. Further advancing of the cartridge 10 relative to the bale 3 on the ground results in the bale 3 while still supported on the ground being captured in the hollow interior region 18 of the cartridge 10 with the lower portion of the bale 3 extending through the bale accommodating slot 33. A pair of shafts 43 of steel extending between and secured to the outer forward guide member 38 of each cartridge 10 and a support plate 45 also of steel extending from the corresponding forward arcuate member 22a defining the forward open mouth 20 of the corresponding cartridge 10 rotatably carry the first guide rollers 40.

Each first guide roller 40 is hollow and of plastics material and defines an outer circumferentially extending bale engaging surface 46 extending between a top end cap 47 and a bottom end cap 48. Bearings (not shown) in the top and bottom end caps 47 and 48 rotatably carry the first guide rollers 40 on the corresponding shafts 43. The bale engaging circumferential surface 46 of each first guide roller 40 is of frusto-conical shape tapering generally upwardly at a cone angle of approximately 15°. Top and bottom edges 50 and 51 of the bale engaging circumferential surface 46 of each first guide roller 40 are radiused adjacent the top and bottom end caps 47 and 48 thereof, and the bale engaging circumferential surface 46 is smooth in order to minimise the risk of puncturing any plastics wrapping material of the bales or otherwise damaging the bales, and to minimise drag between the bale and each first guide roller 40.

The outer and inner main guide members 34 and 35 of each cartridge 10 also terminate in rearward guide members 52 which extend rearwardly outwardly from the rearward open mouth 21 and diverge rearwardly outwardly from the rearward open mouth 21 for accommodating discharge of the bales from the corresponding cartridge 10.

While the main hydraulic rams 32, as well as urging cartridges 10 between the collecting state and the transporting state also act to retain the cartridges 10 in the transporting state, a retaining means comprising a plurality of retaining latches 54 are also provided for retaining the cartridges 10 in the transporting state. Four retaining latches 54 are provided for latching each cartridge 10 in the transporting state 54. Each latch 54 is pivotally coupled to the chassis 4 by a corresponding one of the pivot pin 28 which is carried on the corresponding inverted u-shaped mounting bracket 29, which in turn is mounted on the chassis 4, see Figs. 12 and 13. Each retaining latch 54 terminates in a hook shaped latching element 56 which is engageable with a receiving projection 62 extending from the corresponding one of the pivot mounting brackets 27 of the corresponding cartridge 10 when the cartridge 10 is urged into the transporting state by the corresponding hydraulic rams 32. The retaining latches 54 of each cartridge 10 are spring biased downwardly into a latched state for engaging the receiving projection 62 for in turn retaining the corresponding cartridge 10 in the transporting state by tension springs 63 which act between the chassis 4 and a lever 64 extending radially from a corresponding elongated actuating bar 65 to which each of the retaining latches 54 of the corresponding cartridge 10 are secured by brackets 66. A single acting secondary hydraulic ram 67 acts between the chassis 4 and the lever 64 for urging the corresponding actuating bar 65 upwardly against the spring biasing of the springs 63 for in turn urging the corresponding latches 54 from the latched state into a release state for releasing the latching elements 56 from the corresponding receiving projections 62 of the pivot mounting brackets 27 of the corresponding cartridge 10.

A forward T-shaped member 57 is mounted on the chassis 4 adjacent the forward end 5 thereof and extends upwardly from the chassis 4 and terminates at its upper end in a top cross-member 58. A rearward T-shaped member 59 which is similar to the forward T-shaped member 57, is located adjacent the rearward end 6 of the chassis 4 and extends upwardly therefrom and terminates in a top cross-member 60. The forward and rearward T-shaped members 57 and 59 are provided for retaining the bales 3 in the respective cartridges 10 when the cartridges 10 are in the transporting state. When the cartridges 10 are in the transporting state as illustrated in Fig. 6 the top cross-members 58 and 60 of the forward and rearward T-shaped members 57 and 59 extend across the forward and rearward open mouths 20 and 21, respectively, of the cartridges 10, thereby retaining the bales 3 trapped in the hollow interior regions 18 of the respective cartridges 10.

In use, with the bale transporter 1 hitched to a tractor (not shown) or other suitable prime mover by the forward tow bar 9, the bale transporter 1 with the cartridges 10 in the transporting state is towed into a field in which round bales 3 on the ground are to be transported from the field. When in the field, the retaining latches 54 are operated into the release state and the cartridges 10 are pivoted downwardly about the respective main pivot axes 24 by the main hydraulic rams 32 from the transporting state to the collecting state for engaging and collecting the bales 3 on the ground. The bale transporter 1 is towed to the first of the bales 3 to be collected.

As the bale transporter 1 is being advanced towards the bale on the ground, the bale transporter 1 is manoeuvred so that the adjacent cartridge 10 is relatively closely aligned with the bale, and the central geometrical axis of the bale is extending substantially parallel to the main central longitudinal axis 19 of the adjacent cartridge 10, and if the bale on the ground is not fully aligned with the forward open mouth 20 of the cartridge 10, the cartridge 10 is configured so that the bale, if off-set from the forward open mouth 20, is off-set to the outer side 36 of the forward open mouth 20. As the bale transporter 1 is further advanced towards the bale 3 on the ground, the bale 3 is sequentially and progressively engaged by the first guide rollers 40 of the adjacent cartridge 10, which progressively urge the bale 3 into alignment with the forward open mouth 20 of the adjacent cartridge 10, so that the central geometrical axis of the bale 3 is substantially centrally aligned with and coinciding with the main central longitudinal axis 19 defined by the adjacent cartridge 10.

Thus, further advancing of the bale transporter 1 towards the bale 3 on the ground results in the bale 3 being captured in the hollow interior region 18 of the cartridge 10 while the bale 3 is still supported on the ground. Once the bale 3 has been captured by the cartridge 10 and the bale is located within the hollow interior region 18 thereof adjacent the forward open mouth 20, the cartridge 10 is raised slightly above the ground by the corresponding main hydraulic rams 32 to disengage the captured bale from the ground, and the bale transporter 1 is towed to the next bale to be collected.

Assuming the next bale to be collected is located on the side of the path of normal forward motion of the tractor corresponding to the cartridge 10 which has captured the last bale, the bale transporter 1 is advanced towards the next bale on the ground, as already described, but as the bale transporter 1 is being advanced towards this bale, the corresponding cartridge 10 is maintained in the slightly raised state to maintain the bale or bales already captured in the cartridge 10 clear of the ground, in order to avoid the captured bale or bales dragging on the ground. As the cartridge 10 approaches the bale 3 on the ground, the bale 3 is sequentially and progressively engaged by the corresponding first guide rollers 40 and is progressively urged into alignment with the forward open mouth 20 of the cartridge 10 as already described.

When the bale about to be captured by the cartridge 10 is abutting the last captured bale in the hollow interior region 18 of that cartridge 10, the cartridge 10 is lowered by the main hydraulic rams 32 into the collecting state, so that the already captured bale or bales within the hollow interior region 18 of the cartridge 10 are now resting on the ground with the bale about to be captured abutting the last captured bale. The bale transporter 1 with the cartridge 10 in the collecting state is then advanced further relative to the bale about to be captured until that bale is fully located in the hollow interior region 18 of the cartridge 10 adjacent the forward open mouth 20. Since the already captured bales are also resting on the ground during the capturing of the newly captured bale, the advancing movement of the cartridge 10 to capture the newly captured bale results in the cartridge 10 being advanced relative to both the bale being captured and the captured bales, which in turn results in the captured bales taking up positions in the hollow interior region 18 of the cartridge 10, rearwardly of their original position by the amount of one bale, and the newly captured bale taking up the position in the hollow interior region adjacent the forward open mouth 20 of the cartridge 10.

On the capture of the newly captured bale, the cartridge 10 is again raised slightly above the ground by the main hydraulic rams 32 to disengage the captured bales from the ground, and the bale transporter is towed to the next bale to be collected, and so collection of the round bales 3 into the hollow interior regions 18 of the respective cartridges 10 continues until the hollow interior regions 18 of both cartridges 10 are filled with bales in end to end abutting relationship therein.

The cartridges 10 are then urged about the respective main pivot axes 24 from the collecting state to the transporting state by the main hydraulic rams 32, and are retained in the transporting state by the retaining latches 54. The bale transporter 1 is then towed to the location at which the bales 3 are to be deposited by the bale transporter 1.

To discharge the bales from the cartridges 10, the retaining latches 54 are disengaged from the receiving pins 55, and the cartridges 10 are pivoted about the respective main pivot axes 24 by the main hydraulic rams 32 from the transporting state to the collecting state so that the portions of the bales extending through the bale accommodating slots 33 of the cartridges 10 engage the ground. The bale transporter 1 is then towed by the tractor forwardly and as the bale transporter 1 is being towed forwardly, the bales now supported on the ground remain supported on the ground as the cartridges 10 in the collecting state are advanced forwardly along the bales 3. Once the cartridges 10 have cleared the last of the bales supported on the ground, the cartridges 10 are pivoted into the transporting state about the main pivot axes 24 by the main hydraulic rams 32.

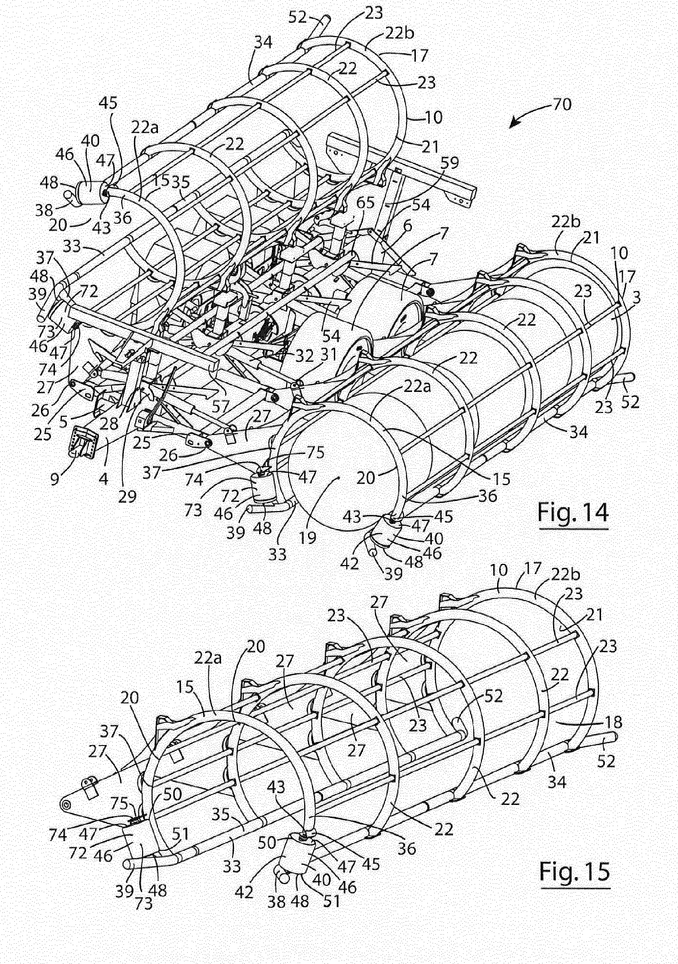

Referring now to Figs. 14 and 15 there is illustrated a bale transporter 70 according to another embodiment of the invention also for transporting wrapped round bales 3 of fodder material. The bale transporter 70 is substantially similar to the bale transporter 1, and similar components are identified by the same reference numerals. The only differences between the bale transporter 70 and the bale transporter 1 are firstly, only one first guide roller 40 is rotatably carried on the outer forward guide member 38 of each cartridge 10 instead of two first guide rollers 40 in the case of each cartridge 10 of the bale transporter 1, and secondly, a second guide roller 72 is rotatably carried on the inner forward guide member 39 of each cartridge 10 of the bale transporter 70 to form a second lead-in 73 to the corresponding forward open mouth 20 which is inwardly directed towards the forward open mouth 20. The second guide rollers 72 are similar to the first guide rollers 40, and similar parts of the second guide rollers 72 are identified by the same reference numerals as those which identify the corresponding parts of the first guide rollers 40. Each second guide roller 72 is rotatably carried on a shaft 74 which extends between and is secured to the corresponding inner forward guide member 39 and a corresponding support plate 75 of steel extending from the forward arcuate member 22a defining the corresponding forward open mouth 20 on the inner side 37 thereof.

The second guide roller 72 of each cartridge 10 progressively engages a bale on the ground, which is off-set to the inner side 37 of the corresponding forward open mouth 20, as the corresponding cartridge 10 is being advanced towards the bale for progressively urging the bale on the ground into alignment with the forward open mouth 20 until the central geometrical axis of the bale is substantially in alignment with and substantially coinciding with the main central longitudinal axis 19 of the corresponding cartridge 10 as already described with reference to the bale transporter 1 of Figs. 1 to 13.

It has been found that, in general, a single first guide roller 40 rotatably mounted on the outer forward guide member 38 of each cartridge 10 is sufficient for progressively urging a bale on the ground which is off-set to the outer side 36 of the forward open mouth 20 into alignment with the forward open mouth 20 as the corresponding cartridge 10 is being progressively advanced towards the bale, so that as the bale is adjacent the forward open mouth 20 and about to pass through the forward open mouth 20, the central geometrical axis of the bale is substantially in alignment with and substantially coinciding with the main central longitudinal axis 19 of the corresponding cartridge 10, as already described with reference to the bale transporter 1 of Figs. 1 to 13. The advantage of providing the first bale roller 40 on the outer forward guide member 38 and the second guide roller 72 on the inner forward guide member 39 of each cartridge 10 is that, as the cartridge 10 is being advanced towards a bale on the ground the bale is progressively urged by one or other of the first and second guide rollers 40 and 72 into alignment with the forward open mouth 20 of the cartridge 10, irrespective of which side of the forward open mouth the bale is off-set towards prior to engagement with the corresponding one of the first guide roller 40 or the second guide roller 72. Thus, once the cartridge 10 has advanced sufficiently towards the bale, so that the bale is adjacent the forward open mouth 20 and the bale is about to enter the hollow interior region 18 of the cartridge 10 through the forward open mouth 20, the bale irrespective of the side of the forward open mouth to which the bale had originally been off-set, the bale will be substantially aligned with the forward open mouth, so that the central geometrical axis of the bale is substantially aligned and substantially coincides with the main central longitudinal axis 19 of the corresponding cartridge 10.

Otherwise, the bale transporter 70 and its use and operation is similar to that of the bale transporter 1.

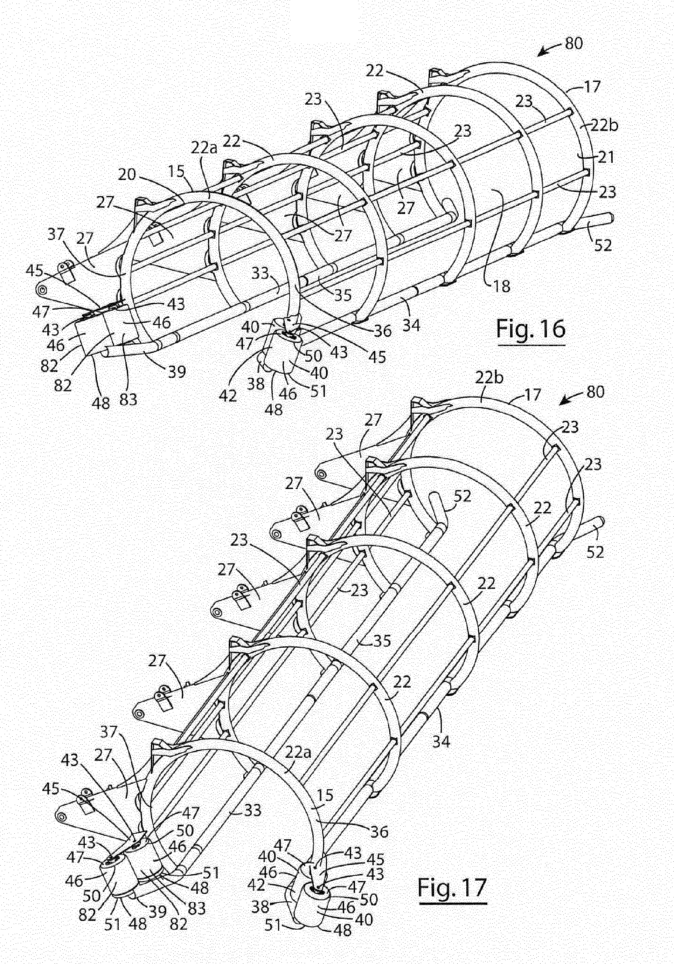

Referring now to Figs. 16 and 17 there is illustrated a cartridge indicated generally by the reference numeral 80 of a bale transporter (not shown) according to another embodiment of the invention. The bale transporter according to this embodiment of the invention comprises a pair of cartridges 80 in a similar manner as the bale transporter 1 comprises the pair of cartridges 10, and the bale transporter according to this embodiment of the invention and the cartridges 80 are substantially similar to the bale transporter 1 and the cartridges 10 described with reference to Figs. 1 to 13, and similar components are identified by the same reference numeral. The main difference between the bale transporter according to this embodiment of the invention and the bale transporter 1 is that as well as each cartridge 80 being provided with a pair of first guide rollers 40 rotatably mounted on the outer forward guide member 38, each cartridge 80 is also provided with a pair of second guide rollers 82 rotatably mounted on the inner forward guide member 39, which form a second lead-in 83 to the forward open mouth 20, which is inwardly directed towards the forward open mouth 20. The second guide rollers 82 are similar to the first guide rollers 40, and similar parts of the second guide rollers 82 are identified by the same reference numerals as those which identify corresponding parts of the first guide rollers 40. The second guide rollers 82 act as the second lead-in for progressively urging a bale on the ground which is off-set to the inner side 37 of the forward open mouth 20 of the corresponding cartridge 80 into alignment with the forward open mouth 20 of the cartridge 80 as the cartridge 80 is being advanced towards the bale, so that as the bale 3 is adjacent the forward open mouth 20 and just about to enter the hollow interior region 18 of that cartridge 80 through the forward open mouth 20, the bale is substantially aligned with the forward open mouth 20 with the central geometrical axis of the bale substantially aligned and substantially coinciding with the main central longitudinal axis 19 of the corresponding cartridge 80.

Accordingly, the advantage of providing each cartridge 80 with pairs of first and second guide rollers 40 and 82 rotatably mounted on the outer and inner forward guide members 38 and 39, respectively, is that irrespective of the side of the forward open mouth 20 of the corresponding cartridge 80, to which a bale on the ground is off-set, as the cartridge 80 is being advanced towards the bale, the bale is progressively urged into alignment with the forward open mouth 20 so that the central geometrical axis of the bale is substantially aligned with and substantially coincides with the main central longitudinal axis 19 of the cartridge 80.

Otherwise, the bale transporter according to this embodiment of the invention and its use and operation is similar to that of the bale transporter 1 described with reference to Figs. 1 to 13.

It will be appreciated that while the bale transporters have been described as comprising a pair of first guide rollers, and a pair of first and second guide rollers as well as single first and second guide rollers any number of first and second guide rollers may be provided on the outer forward guide member of each cartridge or on both the inner and outer forward guide members, respectively, of each cartridge or on both the inner and outer guide members of each cartridge. While the bale transporter 70 described with reference to Figs. 14 and 15 has been described with each cartridge being provided with a single first guide roller and a single second guide roller on the inner and outer forward guide members, respectively, it is envisaged that each cartridge may be provided with only one single first guide roller on the outer forward guide member, and the second guide roller on the inner forward guide member may be dispensed with. Indeed, in certain cases, guide rollers may be provided on the inner forward guide member only of each cartridge. It is also envisaged that guide rollers similar to the first and second guide rollers may be provided on one or both of the rearward guide members which extend rearwardly of the rearward open mouth of each cartridge. It is also envisaged that instead of the guide rollers being of frusto-conical shape, the guide rollers may be cylindrical rollers, and needless to say when provided as frusto-conical rollers the cone angle may be any suitable angle.

While each bale transporter has been described as comprising a pair of cartridges on respective opposite sides of the chassis, it is envisaged in certain cases that the bale transporter may be provided with a single cartridge only.

While the cartridges have been described as being constructed of longitudinally spaced apart arcuate members which are joined by circumferentially spaced apart longitudinal members, the cartridges may be of any suitable or desired construction.

## Claims

1. A transporter comprising at least one elongated cartridge (10) configured for collecting bales sequentially from the ground and defining an elongated hollow interior region (18) and terminating at one end (15) in a forward open mouth (20) configured to accommodate a bale into the hollow interior region (18), the cartridge (10) defining a longitudinally extending main central axis (19), **characterised in that** at least one first guide roller (40) comprising one of a frusto-conical roller and a cylindrical roller is rotatably mounted adjacent the forward open mouth (20) and is configured for urging a bale on the ground into alignment with the forward open mouth (20) of the cartridge (10) as the cartridge is being advanced towards the bale for capturing the bale in the hollow interior region (18).

2. A transporter as claimed in Claim 1 **characterised in that** the at least one first guide roller (40) is configured to define a first lead-in to the forward open mouth (20) for progressively urging the bale into alignment with the forward open mouth (20) of the cartridge (10) as the bale is being progressively engaged by the first guide roller (40).

3. A transporter as claimed in Claim 1 or 2 **characterised in that** at least two first guide rollers (40) are rotatably mounted adjacent the forward open mouth (20) and are configured to define an inwardly angled and directed forward lead-in (42) to the forward open mouth and to sequentially engage a bale as the cartridge (10) is being advanced towards the bale.

4. A transporter as claimed in any preceding claim **characterised in that** the bale transporter is configured for towing by a tractor and the cartridge (10) is configured to extend outwardly on one side of the path of normal forward motion of the tractor with the main central longitudinal axis (19) extending substantially parallel to the direction of normal forward motion of the tractor and with the forward open mouth (20) facing forwardly, and the at least one first guide roller (40) is located forwardly of the forward open mouth (20) of the cartridge (10) on a side of the main central longitudinal axis (19) most remote from the path of the normal forward motion of the tractor.

5. A transporter as claimed in Claim 4 **characterised in that** an outer forward guide member (38) extends from the cartridge (10) adjacent the side of the forward open mouth (20) most remote from the path of normal forward motion of the tractor, the outer forward guide member (38) extending in a generally forwardly outwardly direction from the forward open mouth (20) relative to the path of normal forward motion of the tractor, and the at least one first guide roller (40) is rotatably carried on the outer forward guide member (38).

6. A transporter as claimed in any preceding claim **characterised in that** each first guide roller (40) comprises a frusto-conical roller.

7. A transporter as claimed in Claim 6 **characterised in that** each first guide roller (40) is tapered in a generally upwardly direction at a cone angle in the range of 5° to 30°, and preferably, at a cone angle in the range of 10° to 20°.

8. A transporter as claimed in any preceding claim **characterised in that** at least one second guide roller (72) is rotatably mounted adjacent the forward open mouth (20) of the cartridge (10) and on a side of the forward open mouth (20) opposite to the side of the forward open mouth (20) adjacent which the at least one first guide roller (40) is located, the at least one second guide roller (72) being configured for urging a bale on the ground into alignment with the forward open mouth (20) of the cartridge (10) as the cartridge (10) is being advanced towards the bale for capturing the bale in the hollow interior region (18).

9. A transporter as claimed in Claim 8 **characterised in that** at least two second guide rollers (72) are rotatably mounted adjacent the forward open mouth (20) on the side of the forward open mouth (20) opposite to the side adjacent which the at least one first guide roller (40) is located, the at least two second guide rollers (72) being configured for sequentially engaging a bale as the cartridge (10) is being advanced towards the bale.

10. A transporter as claimed in Claim 8 or 9 **characterised in that** an inner forward guide member (39) extends from the cartridge (10) adjacent the forward open mouth (20) and adjacent the side of the forward open mouth (20) opposite to the side thereof adjacent which the outer forward guide member extends (38), the inner forward guide member (39) extending in a generally forwardly outwardly direction from the forward open mouth (20) with the outer and inner forward guide members (38,39) diverging forwardly outwardly from the forward open mouth (20), and the at least one second guide roller (72) is rotatably carried on the inner forward guide member (39).

11. A transporter as claimed in any of Claims 8 to 10 **characterised in that** each second guide roller (72) comprises a frusto-conical roller.

12. A transporter as claimed in any preceding claim **characterised in that** the transporter comprises a chassis (4), and the cartridge (10) is pivotally mounted on the chassis (4), and is pivotal between a collecting state configured for collecting bales on the ground and a transporting state with the cartridge (10) spaced apart above the ground for transporting bales.

13. A transporter as claimed in Claim 12 **characterised in that** a pair of cartridges (10) are provided, with the main central longitudinal axes (19) of the cartridges (10) extending substantially parallel to each other.

14. A method for aligning and guiding a bale on the ground through a forward open mouth (20) of an elongated cartridge (10) of a bale transporter (1) into an elongated hollow interior region (18) of the cartridge (10), the method comprising providing at least one rotatably mounted first guide roller (40) comprising one of a frusto-conical roller and a cylindrical roller adjacent the forward open mouth (20) of the cartridge (10), advancing the cartridge (10) towards the bale on the ground, engaging the bale on the ground with the at least one first guide roller (40) as the cartridge (10) is advanced relative to the bale to urge the bale into alignment with the forward open mouth (20) of the cartridge (10), and further advancing of the cartridge (10) relative to the bale to capture the bale in the hollow interior region (18) of the cartridge (10).

15. A method as claimed in Claim 14 **characterised in that** the bale transporter is towed by a tractor with the cartridge (10) extending outwardly on one side of the path of normal forward motion of the tractor with a main central longitudinal axis (19) defined by the cartridge (10) extending substantially parallel to the direction of normal forward motion of the tractor and the forward open mouth (20) facing forwardly, and the at least one first guide roller (40) is located forwardly of the forward open mouth (20) of the cartridge (10), and on a side of the forward open mouth (20) most remote from the path of normal forward motion of the tractor.

## Patentansprüche

1. Transporter, umfassend zumindest eine längliche Kassette (10), die zum sequentiellen Einsammeln von Ballen von einem Untergrund eingerichtet ist, und die einen länglichen hohlen Innenbereich (18) definiert und an einem Ende (15) in einer vorderen offenen Mündung (20) endet, die dazu eingerichtet ist, einen Ballen in den hohlen Innenbereich (18) hinein aufzunehmen, wobei die Kassette (10) eine sich in Längsrichtung erstreckende zentrale Hauptachse (19) definiert, **dadurch gekennzeichnet, dass** zumindest eine erste Führungsrolle (40), die eine kegelstumpfförmige Rolle oder eine zylindrische Rolle umfasst, neben der vorderen offenen Mündung (20) drehbar angebracht und dazu eingerichtet ist, einen Ballen auf dem Untergrund bezüglich der vorderen offenen Mündung (20) der Kassette (10) auszurichten, wenn die Kassette auf den Ballen zu vorgeschoben wird, um den Ballen in dem hohlen Innenbereich (18) aufzunehmen.

2. Transporter nach Anspruch 1, **dadurch gekennzeichnet, dass** die zumindest eine Führungsrolle (40) dazu eingerichtet ist, eine erste Einführung zu der vorderen offenen Mündung (20) zu definieren, um den Ballen zunehmend bezüglich der vorderen offenen Mündung (20) der Kassette (10) auszurichten, wenn der Ballen zunehmend mit der ersten Führungsrolle (40) in Eingriff gelangt.

3. Transporter nach Anspruch 1 oder 2, **dadurch gekennzeichnet, dass** zumindest zwei erste Führungsrollen (40) neben der vorderen offenen Mündung (20) drehbar angebracht und dazu eingerichtet sind, eine nach innen abgewinkelte und nach vorne gerichtete Einführung (42) zu der vorderen offenen Mündung zu definieren und nacheinander mit einem Ballen in Eingriff zu gelangen, während die Kassette (10) auf den Ballen zu vorgeschoben wird.

4. Transporter nach einem der vorhergehenden Ansprüche, **dadurch gekennzeichnet, dass** der Ballentransporter dazu eingerichtet ist, von einem Zugfahrzeug gezogen zu werden, und dass die Kassette (10) dazu eingerichtet ist, sich auf einer Seite des Pfads einer normalen Vorwärtsbewegung des Zugfahrzeugs nach außen zu erstrecken, wobei die zentrale Hauptlängsachse (19) sich im Wesentlichen parallel zu der Richtung der normalen Vorwärtsbewegung des Zugfahrzeugs erstreckt, und wobei die vordere offene Mündung (20) nach vorne zeigt, und dass die zumindest eine Führungsrolle (40) vor der vorderen offenen Mündung (20) der Kassette (10) auf einer Seite der zentralen Hauptlängsachse (19) am weitesten von dem Pfad der normalen Vorwärtsbewegung des Zugfahrzeugs entfernt angeordnet ist.

5. Transporter nach Anspruch 4, **dadurch gekennzeichnet, dass** sich ein äußeres vorderes Führungselement (38) von der Kassette (10) neben der Seite der vorderen offenen Mündung (20) am weitesten von dem Pfad der normalen Vorwärtsbewegung des Zugfahrzeugs entfernt erstreckt, wobei sich das äußere vordere Führungselement (38) in eine im Allgemeinen nach vorne und außen gerichtete Richtung von der vorderen offenen Mündung (20) ausgehend relativ zu dem Pfad der normalen Vorwärtsbewegung des Zugfahrzeugs erstreckt, und dass die zumindest eine erste Führungsrolle (40) drehbar auf dem äußeren vorderen Führungselement (38) getragen ist.

6. Transporter nach einem der vorhergehenden Ansprüche, **dadurch gekennzeichnet, dass** jede erste Führungsrolle (40) eine kegelstumpfförmige Rolle umfasst.

7. Transporter nach Anspruch 6, **dadurch gekennzeichnet, dass** jede erste Führungsrolle (40) sich in eine im Allgemeinen nach oben gerichtete Richtung unter einem Kegelwinkel im Bereich von 5 Grad bis 30 Grad und vorzugsweise unter einem Kegelwinkel im Bereich von 10 Grad bis 20 Grad verjüngt.

8. Transporter nach einem der vorhergehenden Ansprüche, **dadurch gekennzeichnet, dass** zumindest eine zweite Führungsrolle (72) neben der vorderen offenen Mündung (20) der Kassette (10) und auf einer Seite der vorderen offenen Mündung (20) gegenüber der Seite der vorderen offenen Mündung (20), neben der die zumindest eine erste Führungsrolle (40) angeordnet ist, drehbar angebracht ist, wobei die zumindest eine zweite Führungsrolle (72) dazu eingerichtet ist, einen Ballen auf dem Untergrund bezüglich der vorderen offenen Mündung (20) der Kassette (10) auszurichten, wenn die Kassette (10) auf den Ballen zu vorgeschoben wird, um den Ballen in dem hohlen Innenbereich (18) aufzunehmen.

9. Transporter nach Anspruch 8, **dadurch gekennzeichnet, dass** zumindest zwei zweite Führungsrollen (72) neben der vorderen offenen Mündung (20) auf der Seite der vorderen offenen Mündung (20) gegenüber der Seite, neben der die zumindest eine erste Führungsrolle (40) angeordnet ist, drehbar angebracht sind, wobei die zumindest zwei zweiten Führungsrollen (72) dazu eingerichtet sind, nacheinander mit dem Ballen in Eingriff zu gelangen, während die Kassette (10) auf den Ballen zu vorgeschoben wird.

10. Transporter nach Anspruch 8 oder 9, **dadurch gekennzeichnet, dass** sich ein inneres vorderes Führungselement (39) ausgehend von der Kassette (10) neben der vorderen offenen Mündung (20) und neben der Seite der vorderen offenen Mündung (20) gegenüber deren Seite erstreckt, neben der sich das äußere vordere Führungselement (38) erstreckt, wobei sich das innere vordere Führungselement (39) in eine im Allgemeinen nach vorne und außen gerichtete Richtung von der vorderen offenen Mündung (20) ausgehend erstreckt, wobei das äußere und das innere vordere Führungselement (38, 39) nach vorne und nach außen ausgehend von der vorderen offenen Mündung (20) auseinanderlaufen, und dass die zweite Führungsrolle (72) auf dem inneren vorderen Führungselement (39) drehbar getragen ist.

11. Transporter nach einem der Ansprüche 8 bis 10, **dadurch gekennzeichnet, dass** jede zweite Führungsrolle (72) eine kegelstumpfförmige Rolle umfasst.

12. Transporter nach einem der vorhergehenden Ansprüche, **dadurch gekennzeichnet, dass** der Transporter ein Fahrgestell (4) umfasst, und dass die Kassette (10) schwenkbar an dem Fahrgestell (4) angebracht und zwischen einem Sammelzustand, der zum Sammeln von Ballen auf dem Untergrund eingerichtet ist, und einem Transportzustand schwenkbar ist, in dem die Kassette (10) oberhalb des Untergrunds zum Transportieren der Ballen beabstandet ist.

13. Transporter nach Anspruch 12, **dadurch gekennzeichnet, dass** ein Paar von Kassetten (10) bereitgestellt ist, wobei die zentralen Hauptlängsachsen (19) der Kassetten (10) sich im Wesentlichen parallel zueinander erstrecken.

14. Verfahren zum Ausrichtung und Führen eines Ballens auf dem Untergrund durch eine vordere offene Mündung (20) einer länglichen Kassette (10) eines Ballentransporters (1) in einen länglichen hohlen Innenbereich (18) der Kassette (10) hinein, wobei das Verfahren umfasst: ein Bereitstellen zumindest einer drehbar angebrachten ersten Führungsrolle (40), die eine kegelstumpfförmige Rolle oder eine zylindrische Rolle umfasst, neben der vorderen offenen Mündung (20) der Kassette (10); Vorschieben der Kassette (10) auf den Ballen auf dem Untergrund zu; in Eingriff bringen des Ballens auf dem Untergrund mit der zumindest einen Führungsrolle (40), wenn die Kassette (10) relativ zu dem Ballen vorgeschoben wird, um den Ballen bezüglich der vorderen offenen Mündung (20) der Kassette (10) auszurichten; und weiteres Vorschieben der Kassette (10) relativ zu dem Ballen, um den Ballen in dem hohlen Innenbereich (18) der Kassette (10) aufzunehmen.

15. Verfahren nach Anspruch 14, **dadurch gekennzeichnet, dass** der Ballentransporter von einem Zugfahrzeug gezogen wird, wobei sich die Kassette (10) auf einer Seite des Pfads der normalen Vorwärtsbewegung des Zugfahrzeugs nach außen erstreckt, wobei eine zentrale Hauptlängsachse (19), die durch die Kassette (10) definiert ist, sich im Wesentlichen parallel zu der Richtung der normalen Vorwärtsbewegung des Zugfahrzeugs erstreckt, wobei die vordere offene Mündung (20) nach vorne zeigt, und dass die zumindest eine Führungsrolle (40) vor der vorderen offenen Mündung (20) der Kassette (10) und auf einer Seite der vorderen offenen Mündung (20) am weitesten von dem Pfad der normalen Vorwärtsbewegung des Zugfahrzeugs entfernt angeordnet ist.

## Revendications

1. Transporteur comprenant au moins une cartouche allongée (10) configurée pour collecter des balles séquentiellement au sol et définissant une région interne creuse allongée (18) et se terminant au niveau d'une extrémité (15), par une bouche ouverte avant (20) configurée pour loger une balle dans la région intérieure creuse (18), la cartouche (10) définissant un axe central principal s'étendant longitudinalement (19), **caractérisé en ce qu'**au moins un premier rouleau de guidage (40) comprenant l'un parmi un rouleau tronconique et un rouleau cylindrique est monté, en rotation, de manière adjacente à la bouche ouverte avant (20) et est configuré pour pousser une balle sur le sol en alignement avec la bouche ouverte avant (20) de la cartouche (10) lorsque la cartouche est avancée vers la balle pour capturer la balle dans la région intérieure creuse (18).

2. Transporteur selon la revendication 1, **caractérisé en ce que** le au moins un premier rouleau de guidage (40) est configuré pour définir une première entrée dans la bouche ouverte avant (20) pour pousser progressivement la balle en alignement avec la bouche ouverte avant (20) de la cartouche (10) lorsque la balle est mise progressivement en prise par le premier rouleau de guidage (40).

3. Transporteur selon la revendication 1 ou 2, **caractérisé en ce qu'**au moins deux premiers rouleaux de guidage (40) sont montés en rotation, de manière adjacente à la bouche ouverte avant (20) et sont configurés pour définir une entrée avant dirigée et coudée vers l'intérieur (42) par rapport à la bouche ouverte avant et pour mettre séquentiellement en prise une balle lorsque la cartouche (10) est avancée vers la balle.

4. Transporteur selon l'une quelconque des revendications précédentes, **caractérisé en ce que** le transporteur de balle est configuré pour être tracté par un tracteur et la cartouche (10) est configurée pour s'étendre vers l'extérieur d'un côté de la trajectoire du mouvement avant normal du tracteur avec l'axe longitudinal central principal (19) qui s'étend sensiblement parallèlement à la direction du mouvement avant normal du tracteur et avec la bouche ouverte avant (20) orientée vers l'avant, et le au moins un premier rouleau de guidage (40) est positionné vers l'avant de la bouche ouverte avant (20) de la cartouche (10) d'un côté de l'axe longitudinal central principal (19) le plus à distance de la trajectoire du mouvement avant normal du tracteur.

5. Transporteur selon la revendication 4, **caractérisé en ce qu'**un élément de guidage avant externe (38) s'étend à partir de la cartouche (10) adjacente au côté de la bouche ouverte avant (20) la plus à distance de la trajectoire de mouvement avant normal du tracteur, l'élément de guidage avant externe (38) s'étendant dans une direction vers l'extérieur généralement avant à partir de la bouche ouverte avant (20) par rapport à la trajectoire de mouvement avant normal du tracteur et le au moins un premier rouleau de guidage (40) est porté, en rotation, sur l'élément de guidage avant externe (38) .

6. Transporteur selon l'une quelconque des revendications précédentes, **caractérisé en ce que** chaque premier rouleau de guidage (40) comprend un rouleau tronconique.

7. Transporteur selon la revendication 6, **caractérisé en ce que** chaque premier rouleau de guidage (40) est progressivement rétréci dans une direction généralement ascendante à un angle conique dans la plage de 5° à 30°, et de préférence, à un angle conique dans la plage de 10° à 20°.

8. Transporteur selon l'une quelconque des revendications précédentes, **caractérisé en ce qu'**au moins un second rouleau de guidage (72) est monté, en rotation, de manière adjacente à la bouche ouverte avant (20) de la cartouche (10) et d'un côté de la bouche ouverte avant (20) opposée au côté de la bouche ouverte avant (20) à côté de laquelle est positionné le au moins un premier rouleau de guidage (40), le au moins un second rouleau de guidage (72) étant configuré pour pousser une balle sur le sol en alignement avec la bouche ouverte avant (20) de la cartouche (10) lorsque la cartouche (10) est avancée vers la balle pour capturer la balle dans la région intérieure creuse (18).

9. Transporteur selon la revendication 8, **caractérisé en ce qu'**au moins deux seconds rouleaux de guidage (72) sont montés en rotation, de manière adjacente à la bouche ouverte avant (20) sur le côté de la bouche ouverte avant (20) opposé au côté à côté duquel est positionné le au moins un premier rouleau de guidage (40), les au moins deux seconds rouleaux de guidage (72) étant configurés pour mettre séquentiellement en prise une balle lorsque la cartouche (10) est avancée vers la balle.

10. Transporteur selon la revendication 8 ou 9, **caractérisé en ce qu'**un élément de guidage avant interne (39) s'étendant à partir de la cartouche (10) adjacente à la bouche ouverte avant (20) et adjacente au côté de la bouche ouverte avant (20) opposé à son côté à côté duquel s'étend l'élément de guidage avant externe (38), l'élément de guidage avant interne (39) s'étendant dans une direction vers l'extérieur généralement avant à partir de la bouche ouverte avant (20) avec les éléments de guidage avant externe et interne (38, 39) qui divergent vers l'avant vers l'extérieur à partir de la bouche ouverte avant (20), et le au moins un second rouleau de guidage (72) est porté, en rotation, sur l'élément de guidage avant interne (39).

11. Transporteur selon l'une quelconque des revendications 8 à 10, **caractérisé en ce que** chaque second rouleau de guidage (72) comprend un rouleau tronconique.

12. Transporteur selon l'une quelconque des revendications précédentes, **caractérisé en ce que** le transporteur comprend un châssis (4), et la cartouche (10) est montée de manière pivotante sur le châssis (4) et peut pivoter entre un état de collecte configuré pour collecter les balles au sol et un état de transport avec la cartouche (10) espacée au-dessus du sol pour transporter les balles.

13. Transporteur selon la revendication 12, **caractérisé en ce que** l'on prévoit une paire de cartouches (10), avec les axes longitudinaux centraux principaux (19) des cartouches (10) qui s'étendent de manière sensiblement parallèle entre eux.

14. Procédé pour aligner et guider une balle sur le sol à travers une bouche ouverte avant (20) d'une cartouche allongée (10) d'un transporteur de balle (1) dans une région intérieure creuse allongée (18) de la cartouche (10), le procédé comprenant les étapes pour prévoir au moins un premier rouleau de guidage (40) monté en rotation, comprenant l'un parmi un rouleau tronconique et un rouleau cylindrique adjacent à la bouche ouverte avant (20) de la cartouche (10), faire avancer la cartouche (10) vers la balle sur le sol, mettre en prise la balle sur le sol avec le au moins un premier rouleau de guidage (40) lorsque la cartouche (10) avance par rapport à la balle afin de pousser la balle en alignement avec la bouche ouverte avant (20) de la cartouche (10), et continuer à faire avancer la cartouche (10) par rapport à la balle afin de capturer la balle dans la région intérieure creuse (18) de la cartouche (10).

15. Procédé selon la revendication 14, **caractérisé en ce que** le transporteur de balle est tracté par un tracteur avec la cartouche (10) qui s'étend vers l'extérieur d'un côté de la trajectoire du mouvement avant normal du tracteur avec un axe longitudinal central principal (19) défini par la cartouche (10) qui s'étend de manière sensiblement parallèle à la direction du mouvement avant normal du tracteur et la bouche ouverte avant (20) orientée vers l'avant, et le au moins un premier rouleau de guidage (40) est positionné vers l'avant de la bouche ouverte avant (20) de la cartouche (10), et sur un côté de la bouche ouverte avant (20) le plus à distance de la trajectoire du mouvement avant normal du tracteur.
